# EUROPÄISCHE PATENTANMELDUNG

(11) **EP 2 433 509 A2**
(43) Veröffentlichungstag der Anmeldung: **28.03.2012**
(21) Anmeldenummer: 11181347.3
(22) Anmeldetag: 15.09.2011
(51) Int. Cl.: A24C 5/34, B65B 19/30, G01N 22/00, G01N 22/02, G01N 22/04

(54) **Vorrichtung und Verfahren zur Messung von Eigenschaften eines bewegten Materialstrangs, insbesondere Zigarettenstrangs, mittels eines Mikrowellenresonators, der von einem Seitenbandsignal beaufschlagt wird**

(30) Priorität: 28.09.2010 DE 102010041571
(71) Anmelder: HAUNI Maschinenbau AG, 21033 Hamburg (DE)
(72) Erfinder: Schröder, Dierk, 22399 Hamburg (DE)
(74) Vertreter: Volmer, Jochen

(57) **Zusammenfassung**

Die Erfindung betrifft eine Vorrichtung zur Verarbeitung und Messung von Eigenschaften eines bewegten Materialstrangs (28) der Tabak verarbeitenden Industrie, umfassend eine Mikrowellenmesseinrichtung (29), die einen Mikrowellenresonator (54) aufweist, durch den der Materialstrang (28) gefördert wird oder förderbar ist, sowie einen Mikrowellengenerator (71, 71') mit einer Ausgangsfrequenz f₀. Die Erfindung betrifft ferner eine entsprechende Mikrowellenmesseinrichtung sowie ein Verfahren zum Verarbeiten und Messen von Eigenschaften eines bewegten Materialstrangs (28) der Tabak verarbeitenden Industrie.

Die Vorrichtung und die Mikrowellenmesseinrichtung zeichnen sich dadurch aus, dass der Mikrowellenresonator (54) über einen Einseitenband-Modulator (73) mit einem Seitenbandsignal beaufschlagbar oder beaufschlagt ist, dessen Seitenbandfrequenz f₀+f_{IM} oder f₀-f_{IM} gegenüber der Ausgangsfrequenz f₀ um eine von einem frequenzstabilisierten Oszillator (74, 82) erzeugte Zwischenfrequenz f_{IM}, die kleiner als f₀ ist, verschoben ist, wobei wenigstens eine Analyseanordnung (77, 78, 79; 77', 78', 79'; 77", 78", 79") vorgesehen ist, die eine Serienschaltung aus einem Einseitenband-Demodulator (77, 77', 77"), einem Tiefpassfilter (78, 78', 78") und einem Analog-Digital-Wandler (79, 79', 79") umfasst, wobei der Einseitenband-Demodulator (77, 77', 77") einerseits mit einem von dem Mikrowellenresonator (54) transmittierten oder reflektierten Messsignal der Seitenbandfrequenz f₀+f_{IM} oder f₀-f_{IM} und andererseits mit der Ausgangsfrequenz f₀ beaufschlagt oder beaufschlagbar ist, wobei der Tiefpassfilter (78, 78', 78") ausgebildet ist, ein Ausgangssignal des Einseitenband-Demodulators (77, 77', 77") mit der Zwischenfrequenz f_{IM} durchzulassen und höherfrequente Signalanteile herauszufiltern.

## Beschreibung

Die Erfindung betrifft eine Vorrichtung zur Verarbeitung und Messung von Eigenschaften eines bewegten Materialstrangs der Tabak verarbeitenden Industrie, umfassend eine Mikrowellenmesseinrichtung, die einen Mikrowellenresonator aufweist, durch den der Materialstrang gefördert wird oder förderbar ist, sowie einen Mikrowellengenerator mit einer Ausgangsfrequenz f₀. Die Erfindung betrifft weiterhin eine Mikrowellenmesseinrichtung für eine entsprechende Vorrichtung sowie ein Verfahren zum Verarbeiten und Messen von Eigenschaften eines bewegten Materialstrangs, insbesondere der Tabak verarbeitenden Industrie, der durch einen Mikrowellenresonator gefördert wird, wobei eine Ausgangsfrequenz f₀ erzeugt wird.

Die Erfindung betrifft insbesondere das Gebiet der Strangbildung und Strangverarbeitung in der Tabak verarbeitenden Industrie, also die Erzeugung von Zigarettensträngen und Filtersträngen in Strangmaschinen. Beispielsweise wird ein Zigarettenstrang erzeugt, indem zunächst Tabak auf einen Strangförderer aufgeschauert wird, der Tabakstrang mit einem Zigarettenpapierstreifen umhüllt wird und anschließend von dem Tabakstrang Zigaretten mehrfacher Gebrauchslänge abgelängt werden. Das Bilden des Tabak- oder Filterstrangs und das anschließende Schneiden bzw. Ablängen des Strangs erfolgt mit hoher Geschwindigkeit. Typisch sind bei heutigen Zigaretten- und Filterherstellungsmaschinen Stranggeschwindigkeiten von 10 m/s, wobei bei 100 mm Abschnittslänge ein Schnitttakt von 100 pro Sekunde folgt.

Die Qualität der Zigaretten hängt vom Zustand des Tabaks im Zigarettenstrang ab. Aus diesem Grund ist vorgesehen, die Feuchtigkeit und die Dichte des Tabaks im Zigarettenstrang zu messen und insbesondere die Dichte zu regeln. Weiterhin wird im Falle von plötzlichen und kurzzeitigen Signalschwankungen auf das Vorhandensein von Fremdkörpern geschlossen, wobei die entsprechenden Strangabschnitte nachfolgend ausgesondert werden.

Dies geschieht in modernen Zigarettenherstellungsmaschinen mit der Hilfe von Mikrowellenmesseinrichtungen, die wenigstens ein Mikrowellen-Resonatorgehäuse aufweisen, durch das der Tabakstrang hindurchgeführt wird, wie es beispielsweise in DE 10 2004 017 597 B4 offenbart ist, dessen Offenbarung in dieser Patentanmeldung vollinhaltlich aufgenommen sein soll. Darin ist ein Resonatorgehäuse mit einem Resonatorraum in Form eines Hohlzylinders offenbart, der symmetrisch zum Zigarettenstrang angeordnet ist. Es sind eine Einkopplungsantenne und eine Auskopplungsantenne vorgesehen, mit deren Hilfe ein Mikrowellensignal zur Anregung einer Schwingung im Resonatorraum eingekoppelt wird und ein transmittierter Teil wieder ausgekoppelt wird.

Die Messung mittels eines Mikrowellenresonators nutzt den physikalischen Umstand, dass die Resonanzkurve des Mikrowellenfeldes sich im Mikrowellenresonator bei Anwesenheit eines Materialstrangs im Mikrowellenresonator ändert. Im Grundsatz wird die komplexe Dielektrizitätskonstante des durch den Resonator geführten Materialstranges gemessen. Die komplexe Dielektrizitätskonstante weist einen Realteil und einen Imaginärteil bzw. einen Betrag und eine Phase auf. In den beiden Kennwerten der komplexen Dielektrizitätskonstanten sind die Informationen der Dichte und des Wassergehalts des Stranges enthalten. Veränderungen von Dichte oder Wassergehalt führen zu den charakteristischen Veränderungen der beiden Kennwerte und damit der Resonanzkurve des Mikrowellenresonators.

Gegenüber dem unbeladenen Mikrowellenresonator verschiebt sich das Maximum bzw. Minimum einer Resonanzkurve bei Anwesenheit eines Strangmaterials hin zu niedrigen Frequenzen. Außerdem verbreitert sich die Resonanzkurve. Änderungen der Dichte und Änderungen der Feuchte des Materialstrangs erzeugen jeweils eigene spezifische Veränderungen der Position, Höhe und Breite der Resonanzkurve. Wenn wenigstens zwei Messgrößen der Resonanzkurve gemessen werden, können daher die Dichte und die Feuchte im Rahmen der Messgenauigkeit und der Korrelationen der funktionalen Abhängigkeiten der Messwerte von Strangdichte und Strangfeuchte unabhängig voneinander bestimmt werden.

Eine Auswerteschaltung zur Auswertung eines Mikrowellenresonator-Messsignals ist aus EP 0 791 823 A2 bekannt, deren Offenbarung ebenfalls vollinhaltlich in die vorliegende Patentanmeldung aufgenommen sein soll. Mehrere unabhängige Messgrößen werden erzeugt, indem dem Resonator Mikrowellen mit mindestens zwei unterschiedlichen Frequenzen zugeführt werden, mit denen ein Teil der Resonanzkurve abgetastet wird. Verschiebungen der Resonanz werden durch Vergleich der von dem Stoff unbeeinflussten und beeinflussten Resonanzkurven des Resonators erfasst und die Dämpfung durch Vergleich der Amplituden der Resonanzkurven bei den Frequenzen der zugeführten Mikrowellen erfasst. Aus der Höhe des gemessenen Signals und der Steilheit der Flanke werden Dichte und Feuchtigkeit des Tabakstrangs rekonstruiert.

Die Grundfrequenz des Mikrowellensignals wird bezüglich der Resonanzkurve für den unbeladenen Mikrowellenresonator so eingestellt, dass sie auf dem Wendepunkt einer der Flanken der Resonanzkurve liegt. Die modulierten wenigstens zwei Frequenzen liegen auf der gleichen Flanke oberhalb und unterhalb des Wendepunktes. In einem Zahlenbeispiel werden als Eingangsfrequenzen 5,79 GHz und 5,81 GHz, also 5,8 GHz ± 10 MHz genannt. Zwischen den beiden Frequenzen wird alle 5 µs umgeschaltet, also mit einer Frequenz von 100 kHz. Das Mikrowellenausgangssignal wird über einen Zirkulator und eine Mikrowellendiode gleichgerichtet und über einen Analog-Digital-Wandler zu einer Auswerteanordnung weitergeleitet.

Diese Vorgehensweise trifft in der Praxis auf Grenzen. So wird bei der Messung auf einer Flanke einer Resonanzkurve bei einer festen Arbeitsfrequenz gemessen, vorzugsweise im Wendepunkt der Flanke der Resonanz des unbeladenen Resonators. Bei vergleichsweise kleinen Materialmengen im Resonator werden in diesem Fall nur geringe Signaländerungen beobachtet, während bei großen Materialmengen große Signaländerungen auftreten, die auch zu Übersteuerungen führen können. Geringe Signaländerungen bedeuten eine verschlechterte Genauigkeit der Messung und eine verschlechterte Diskriminierung der Strangdichte und Strangfeuchte. Die kleinen auftretenden Signaländerungen, bei denen das System immer noch zuverlässig arbeiten soll, stellen daher eine hohe Genauigkeitsanforderung an die Mikrowellensignalverarbeitung. Wegen dieser hohen Anforderungen müssen alle Komponenten mit sehr hoher Genauigkeit hergestellt und montiert werden, was entsprechend hohe Kosten verursacht.

Ebenfalls wegen der kleinen Signaländerungen wirken sich kleine Veränderungen bzw. Drifts der Kennwerte der Mikrowellenschaltungskomponenten, die beispielsweise durch Bauteilealterung oder durch Temperaturschwankungen und andere äußere Veränderungen entstehen können, auf die Messgenauigkeit aus. Dies hat zur Folge, dass die genaue Kalibrierung des Systems häufig überprüft und gegebenenfalls wiederholt werden muss.

Bei dem bekannten Messverfahren müssen die Mikrowellensignale gleichgerichtet werden. Dies geschieht mit Mikrowellendioden, insbesondere Schottky-Dioden. Diese Dioden haben eine individuelle nichtlineare und temperaturabhängige Kennlinie, die systematische Messungenauigkeiten verursachen, die nur unvollständig anhand von Temperaturmessungen korrigiert werden können. Diese Tatsache schränkt die Messgenauigkeit ein und erfordert einen individuellen Abgleich.

Unabhängig hiervon ist bei Messungen mit einem Mikrowellenresonator außerhalb der Resonanzfrequenz zu beachten, dass die Form des für die Messung verwendeten elektrischen Feldes außerhalb der Resonanzfrequenz nicht idealtypisch axial, sondern schräg im Resonator ausgerichtet ist und in der Form des Feldes auch noch von Befüllungsgrad, Strangdichte und Strangfeuchte abhängig ist. Dies hat eine Lageabhängigkeit der Messgenauigkeit zur Folge. Bei einer Fremdkörpererkennung auf Basis der Mikrowellenmessung werden eventuell im Materialstrang vorhandene Fremdkörper daher je nach Lage im Strang unterschiedlich gut erkannt.

Gegenüber dem Stand der Technik liegt daher der Erfindung die Aufgabe zugrunde, eine Vorrichtung, eine Messeinrichtung und ein Verfahren zur Verarbeitung und Messung von Eigenschaften eines mit hoher Geschwindigkeit längsaxial bewegten Materialstrangs, insbesondere der Tabak verarbeitenden Industrie, anzugeben, mit dem die zuvor genannten Genauigkeitsanforderungen besser als bisher eingehalten werden.

Diese Aufgabe wird durch eine Vorrichtung zur Verarbeitung und Messung von Eigenschaften eines, insbesondere längsaxial, bewegten Materialstrangs, insbesondere der Tabak verarbeitenden Industrie, umfassend eine Mikrowellenmesseinrichtung, die einen Mikrowellenresonator aufweist, durch den der Materialstrang gefördert wird oder förderbar ist, sowie einen Mikrowellengenerator mit einer Ausgangsfrequenz f₀, gelöst, die dadurch weitergebildet ist, dass der Mikrowellenresonator über einen Einseitenband-Modulator mit einem Seitenbandsignal beaufschlagbar oder beaufschlagt ist, dessen Seitenbandfrequenz f₀+f_{IM} oder f₀-f_{IM} gegenüber der Ausgangsfrequenz f₀ um eine von einem frequenzstabilisierten Oszillator erzeugte Zwischenfrequenz f_{IM}, die kleiner als f₀ ist, verschoben ist, wobei wenigstens eine Analyseanordnung vorgesehen ist, die eine Serienschaltung aus einem Einseitenband-Demodulator, einem Tiefpassfilter und einem Analog-Digital-Wandler umfasst, wobei der Einseitenband-Demodulator einerseits mit einem von dem Mikrowellenresonator transmittierten oder reflektierten Messsignal der Seitenbandfrequenz f₀+f_{IM} oder f₀-f_{IM} und andererseits mit der Ausgangsfrequenz f₀ beaufschlagt oder beaufschlagbar ist, wobei der Tiefpassfilter ausgebildet ist, ein Ausgangssignal des Einseitenband-Demodulators mit der Zwischenfrequenz f_{IM} durchzulassen und höherfrequente Signalanteile herauszufiltern.

Die Erfindung beruht auf dem Grundgedanken, dass in der erfindungsgemäßen Vorrichtung mittels eines Einseitenband-Verfahrens das reflektierte oder transmittierte Messsignal unter Erhalt der Amplitude und der Phase auf die Zwischenfrequenz f_{IM} herabmoduliert wird. Die Zwischenfrequenz f_{IM} befindet sich nicht im Mikrowellenbereich, sondern hat eine wesentlich kleinere Frequenz, insbesondere zwischen 100 kHz und 100 MHz, vorzugsweise zwischen 1 und 20 MHz. Dieses Signal ist, im Unterschied zum Mikrowellensignal, welches beispielsweise eine Frequenz von ca. 6 GHz aufweist, einer direkten Analog-Digital-Wandlung mit verfügbaren schnellen A/D-Wandlern zugänglich, so dass Nichtlinearitäten analoger Bauteile, wie sie durch eine Mikrowellendiode erzeugt werden, vermieden werden. Wegen der entsprechend größeren Signalamplitude werden Drift- und Toleranzeinflüsse minimiert und damit Zykluszeiten zwischen Systemüberprüfungen und Rekalibrierungen verlängert.

Die Verarbeitung des Materialstrangs kann beispielsweise die Herstellung eines Zigarettenstrangs oder eines Filterstrangs, die Zugabe von Additiven, die Umhüllung des Strangs mit einem Umhüllungspapier und/oder das Ablängen von Zigaretten oder Filterstopfen sein, oder auch die Herstellung eines Strangs aus Textilfasern und die Reckung des Strangs. Die Messergebnisse können dazu verwendet werden, den Herstellungsprozess und/oder den Verarbeitungsprozess so zu steuern, dass eine gleichbleibende Strangdichte und Strangfeuchtigkeit erreicht wird, oder Teile des Strangs, deren Dichte oder Feuchtigkeit außerhalb vorgegebener Parameter liegt, von der weiteren Verarbeitung auszuschließen.

Das Resonanzverhalten des Resonators kann in Reflexionsanordnung gemessen werden, bei der nur ein Port am Resonator zum Einkoppeln eines Mikrowellensignals und für die Messung verwendet wird, oder in Transmissionsanordnung, bei der ein Port am Mikrowellenresonator zur Einkopplung und ein weiterer Port für die Messung des transmittierten Signals verwendet werden. In der Mikrowellentechnik wird das Transmissions- und Reflexionsverhalten von Resonatoren durch Streuparameter, die sogenannten "S-Parameter" beschrieben. Dabei beschreibt der Parameter S₁₁ die Reflexion am Eingangsport des Resonators in Abhängigkeit der Frequenz und der S₂₁ die Transmissionseigenschaften vom Eingangsport zum Ausgangsport. Beide S-Parameter sind komplexwertige Funktionen der Frequenz sowie der komplexwertigen Dielektrizitätskonstanten des Stranges. Man kann die S-Parameter als Realteil und Imaginärteil darstellen oder als Betrag und Phase. Veränderungen von Dichte oder Wassergehalt des Stranges wirken sich im letztgenannten Fall als Veränderungen von Betrag und Phase der S-Parameter des Resonators aus.

Bei dem erfindungsgemäß eingesetzten Einseitenband-Modulationsverfahren wird durch Mischung einer harmonischen Mikrowellenschwingung f₀ mit einem niederfrequenten harmonischen Signal f_{IM} ein Frequenzgemisch von Signalen erzeugt, das aus der Grundfrequenz f₀ und den Seitenbändern f₀+f_{IM} als oberes Seitenband und f₀-f_{IM} als unteres Seitenband besteht. Durch das in der Hochfrequenztechnik bekannte Einseitenband-Modulationsverfahren mit unterdrücktem Träger wird erreicht, dass nur noch entweder das obere Seitenband oder das untere Seitenband jeweils ohne Träger aus dem Frequenzgemisch übrig bleibt.

Bei der Demodulation wird das übrig gebliebene Seitenband mit der Grundfrequenz f₀ moduliert, wodurch ein Signal mit der Zwischenfrequenz f_{IM} entsteht, dessen Amplitude und Phase diejenigen der erzeugenden Frequenzen f₀±f_{IM} und f₀ enthält, die somit aus dem Zwischenfrequenzsignal rekonstruierbar sind. Somit werden störende Mischprodukte weitgehend unterdrückt. Innerhalb der Stabilität des Grundsignals f₀ gehen Änderungen der Amplitude und Phase des Zwischenfrequenzsignals somit auf Änderungen des vom Mikrowellenresonator transmittierten oder reflektierten Signals zurück.

Vorzugsweise sind wenigstens zwei, insbesondere gleichartige, Analyseanordnungen mit jeweils einer Serienschaltung umfassend jeweils einen Einseitenband-Demodulator, einen Tiefpassfilter und einen Analog-Digital-Wandler, vorgesehen, wobei eine Analyseanordnung ein von dem Mikrowellenresonator transmittiertes Messsignal empfängt und eine andere Analyseanordnung ein von dem Mikrowellenresonator reflektiertes Messsignal empfängt. Auf diese Weise werden, insbesondere mittels gleichartiger Analyseanordnungen, sowohl die S₂₁- als auch die S₁₁-Parameter mit Hilfe des erfindungsgemäß eingesetzten Einseitenband-Modulationsverfahrens gemessen. Die größere Anzahl von Messwerten erlaubt eine weitere Erhöhung der Genauigkeit der Bestimmung von Dichte und Feuchtigkeit des Materialstranges. Beide Analyseanordnungen sind vorzugsweise auf eine nachgeordnete gemeinsame Auswerteeinrichtung geführt.

Vorteilhafterweise ist zwischen dem Einseitenband-Modulator und dem Mikrowellenresonator ein Isolator, ein Zirkulator, ein Richtkoppler, ein anderer Signalteiler und/oder ein Dämpfungsglied angeordnet. Diese Bauelemente verhindern unter anderem eine Störung des Generators durch reflektierte Mikrowellenleistung. Ein geeignetes Dämpfungsglied hat eine Dämpfung von beispielsweise etwa 6 dB.

Zur Verbesserung der Signalqualität ist insbesondere zwischen dem Ausgang des Mikrowellenresonators und dem Eingang des Einseitenband-Demodulators ein Isolator, ein Zirkulator und/oder ein Dämpfungsglied angeordnet.

Wenn vorteilhafterweise eine weitere, insbesondere gleichartige, Analyseanordnung mit einer Serienschaltung umfassend einen Einseitenband-Demodulator, einen Tiefpassfilter und einen Analog-Digital-Wandler, vorgesehen ist, die über den eingangsseitig angeordneten Zirkulator, Isolator, Richtkoppler, einen anderen Signalteiler und/oder ein Dämpfungsglied einen ausgekoppelten Teil des unmodulierten Seitenbandsignals empfängt, steht ein Signal zur Verfügung, aus dem ein direkter Vergleich der Eingangs- und Ausgangssignale nach Betrag und Phase ermöglicht wird, insbesondere mittels einer nachgeordneten gemeinsamen Auswerteeinrichtung. Auch eine Drift in der Amplitude und/oder der Phase des Ausgangssignals kann somit kompensiert werden. Die Kompensation kann in einer nachgeordneten Auswerteeinrichtung oder mittels einer Regelschleife erfolgen, wobei das Eingangssignal auf einen konstanten Wert geregelt wird.

Vorzugsweise sind die Analyseanordnungen mit den Serienschaltungen jeweils gleichartig, so dass unmittelbare Vergleiche möglich sind. Gleichartig bedeutet insbesondere, dass die Tiefpassfilter gleiche Filterverläufe aufweisen und die Analog-Digital-Wandler aufeinander abgestimmt sind, insbesondere in ihren Schwellenwerten und Dynamikbereichen und -faktoren.

In einer vorteilhaften Weiterbildung ist eine Steuereinrichtung vorgesehen, mittels der die Ausgangsfrequenz f₀ so steuerbar ist, dass die Seitenbandfrequenz f₀+f_{IM} oder f₀-f_{IM} einer momentanen Resonanzfrequenz im Mikrowellenresonator nachgeführt wird. Die Nachführung der Seitenbandfrequenz, die in den Mikrowellenresonator eingeleitet wird, nach der momentanen Resonanzfrequenz im Mikrowellenresonator hat mehrere Vorteile. So ist in der Resonanz die Form des für die Messung verwendeten elektrischen Feldes idealtypisch axial ausgerichtet, so dass die Messgenauigkeit nicht mehr orts- oder lageabhängig ist. So werden beispielsweise Fremdkörper im Strang unabhängig von ihrer Lage gleich gut erkannt. Außerdem ist die Mikrowellenamplitude des transmittierten Signals in der Resonanz bei jeder beliebigen Dämpfung im Resonator maximal. Fehlereinflüsse durch Bauteileinflüsse werden hierdurch minimiert. Es besteht der weitere Vorteil, dass ohne Systemumstellung über wesentlich größere Messbereiche gearbeitet werden kann.

Da die Steuereinrichtung anhand der in Echtzeit einlaufenden Messwerte der Analog-Digital-Wandler die Frequenznachführung bewerkstelligt, ist eine quasi-kontinuierliche und quasi-instantane Frequenznachführung möglich, die also eine minimale Zeitverzögerung aufweist.

In einer bevorzugten Ausführungsform ist die Steuereinrichtung ausgebildet, den Wert der Phase und/oder der Amplitude des transmittierten oder reflektierten Signals als Regelgröße zu verwenden, wobei ein Wert der Phase von Null und/oder ein Amplitudenmaximum oder ein Amplitudenminimum angestrebt wird. In der Resonanz haben die Phasen sowohl des transmittierten Signals als auch des reflektierten Signals einen Nulldurchgang. Bei Anwesenheit eines Materialstrangs im Resonator haben die Frequenzverläufe der beiden Phasen um den Nulldurchgang herum einen weitgehend linearen Verlauf. Aus diesem Grund eignen sich die Phasen bzw. der Nulldurchgang der Phasen als Regelgröße für die Frequenznachführung sehr gut. Die Information über die Phase ist nach Bruchteilen von Millisekunden vorhanden, so dass eine Nachregelung der in den Mikrowellenresonator eingekoppelten Frequenz nach der Resonanzfrequenz quasi-instantan erfolgt. In diesem Zeitraum wird ein Tabakstrang beispielsweise nur um Bruchteile eines Millimeters weiterbewegt.

Ebenfalls vorzugsweise ist die Steuereinrichtung ausgebildet, ein Amplitudenmaximum zu berechnen, in dem die Amplituden von wenigstens zwei Frequenzen in der Nähe der Resonanzfrequenz gemessen werden.

In einer bevorzugten Weiterbildung ist vorgesehen, dass eine digitale Signalerzeugungsvorrichtung als Mikrowellengenerator zur Erzeugung der Ausgangsfrequenz f₀ durch direkte digitale Synthese (DDS) vorgesehen ist, wobei der Einseitenband-Modulator als I/Q-Modulator und der Einseitenband-Demodulator als I/Q-Demodulator ausgebildet ist, wobei insbesondere ein Digital-Analog-Wandler oder der I/Q-Modulator und/oder der I/Q-Demodulator zur Erzeugung von zwei um 90° gegeneinander verschobenen Signalen für die Zwischenfrequenz f_{IM} vorgesehen ist. Damit ist die Signalerzeugung sowohl der Mikrowellen als auch des Zwischenfrequenzsignals durch Digital-Analog-Wandlung erreicht, wobei I/Q-Modulation und I/Q-Demodulation ein sehr robustes und störungsunempfindliches Verfahren darstellen.

Vorteilhafterweise ist eine Auswerteeinrichtung zur Auswertung der Ausgangssignale des oder der Analog-Digital-Wandler vorgesehen, wobei die Auswerteeinrichtung insbesondere in die Steuereinrichtung integriert ist. Die Auswerteeinrichtung ist vorzugsweise den Analog-Digital-Wandlern gemeinsam nachgeschaltet.

Die der Erfindung zugrunde liegende Aufgabe wird auch durch eine Mikrowellenmesseinrichtung für eine Vorrichtung zur Verarbeitung und Messung von Eigenschaften eines bewegten Materialstrangs der Tabak verarbeitenden Industrie, wie vorstehend beschrieben, gelöst, mit einem Mikrowellenresonator, durch den der Materialstrang gefördert wird oder förderbar ist, sowie einem Mikrowellengenerator mit einer Ausgangsfrequenz f₀, dadurch gekennzeichnet, dass der Mikrowellenresonator über einen Einseitenband-Modulator mit einem Seitenbandsignal beaufschlagbar oder beaufschlagt ist, dessen Seitenbandfrequenz f₀+f_{IM} oder f₀-f_{IM} gegenüber der Ausgangsfrequenz f₀ um eine von einem frequenzstabilisierten Oszillator erzeugte Zwischenfrequenz f_{IM}, die kleiner als f₀ ist, verschoben ist, wobei wenigstens eine Analyseanordnung vorgesehen ist, die eine Serienschaltung aus einem Einseitenband-Demodulator, einem Tiefpassfilter und einem Analog-Digital-Wandler umfasst, wobei der Einseitenband-Demodulator einerseits mit einem von dem Mikrowellenresonator transmittierten oder reflektierten Messsignal der Seitenbandfrequenz f₀+f_{IM} oder f₀-f_{IM} und andererseits mit der Ausgangsfrequenz f₀ beaufschlagt oder beaufschlagbar ist, wobei der Tiefpassfilter ausgebildet ist, ein Ausgangssignal des Einseitenband-Demodulators mit der Zwischenfrequenz f_{IM} durchzulassen und höherfrequente Signalanteile herauszufiltern.

Die Mikrowellenmesseinrichtung weist die gleichen Eigenschaften, Merkmale und Vorteile auf wie die erfindungsgemäße Vorrichtung.

Schließlich wird die der Erfindung zugrunde liegende Aufgabe auch durch ein Verfahren zum Verarbeiten und Messen von Eigenschaften eines bewegten Materialstrangs der Tabak verarbeitenden Industrie, der durch einen Mikrowellenresonator gefördert wird, wobei eine Ausgangsfrequenz f₀ erzeugt wird, gelöst, das dadurch weitergebildet ist, dass die Ausgangsfrequenz f₀ in einem Einseitenband-Modulator mit einer Zwischenfrequenz f_{IM}, die kleiner als f₀ ist, moduliert wird und ein Seitenbandsignal mit einer Seitenbandfrequenz fo+f_{IM} oder f₀-f_{IM}, insbesondere über einen Isolator, Zirkulator, einen Richtkoppler und/oder anderen Signalteiler, in den Mikrowellenresonator eingeleitet wird, wobei das vom Mikrowellenresonator transmittierte und/oder reflektierte Signal der Seitenbandfrequenz f₀+f_{IM} oder f₀-f_{IM} in einem Einseitenband-Demodulator mit einem Signal der Ausgangsfrequenz f₀ moduliert wird und in einem Tiefpassfilter ein Messsignalanteil mit der Zwischenfrequenz f_{IM} zu einem Analog-Digital-Wandler durchgelassen wird, während höherfrequente Signalanteile herausgefiltert werden.

Dieses Verfahren entspricht dem in der erfindungsgemäßen Vorrichtung und der erfindungsgemäßen Messeinrichtung durchgeführten Verfahren. Auch das Verfahren bietet die erfindungsgemäßen Vorteile, insbesondere der Unabhängigkeit von nichtlinearen Kennlinien von analogen Bauelementen, wie beispielsweise Schottky-Dioden, und der daraus resultierenden Unempfindlichkeit der Genauigkeit von kleinen Signalamplituden. Das erfindungsgemäße Verfahren liefert die Daten, aus denen die Streuparameter S₁₁ und/oder S₂₁ gemessen werden, und zwar nach Amplitude und/oder Phase bzw. Realteil und/oder Imaginärteil. Amplituden und Phase sind in einem Signal der vergleichsweise niedrigen Zwischenfrequenz f_{IM} enthalten, das einer direkten Analog-Digital-Wandlung zugänglich ist, so dass die digitalen Ausgangswerte bereits die erforderlichen Informationen über Amplitude und Phase beinhalten.

Vorzugsweise wird mittels Einseitenband-Demodulation mit der Ausgangsfrequenz f₀ ein durch einen Isolator, einen Zirkulator, einen Richtkoppler, einen anderen Signalteiler und/oder ein Dämpfungsglied vom Mikrowellenresonator abgeschirmtes Seitenbandsignal der Seitenbandfrequenz f₀+f_{IM} oder f₀-f_{IM} auf die Zwischenfrequenz f_{IM} herab moduliert und über einen Tiefpassfilter auf einen Analog-Digital-Wandler übertragen. Dies bedeutet, dass das Ausgangs-Seitenbandsignal, das nicht durch vom Mikrowellenresonator reflektierte Signalanteile gestört ist, als direkter Referenzwert digitalisiert vorliegt und als Vergleichswert für die Messsignale des reflektierten und/oder transmittierten Signals dient. Dabei ist an der Stelle, an der das Seitenbandsignal abgegriffen wird, das Signal mittels des Isolators, Zirkulators und/oder Dämpfungsglieds von reflektierten Signalen abgeschirmt.

Vorzugsweise werden sowohl der oder die Analog-Digital-Wandler als auch ein Oszillator, der die Zwischenfrequenz f_{IM} erzeugt, auf ein frequenzstabilisiertes Zeitsignal hin synchronisiert. Dies hat zur Folge, dass die Phasenlage der Abtastung des auf die Zwischenfrequenz f_{IM} herab modulierten Ausgangssignals auf dessen Phase synchronisiert ist, so dass jederzeit die Phase des Signals mit hoher Genauigkeit bestimmt werden kann. Fehlmessungen der Phase durch Phasenverschiebungen zwischen der Erzeugung der Zwischenfrequenz f_{IM} und der Abtastung sind damit ausgeschlossen.

In einer bevorzugten Weiterbildung ist vorgesehen, dass eine Regelung der Seitenbandfrequenz auf eine momentane Resonanzfrequenz im Mikrowellenresonator hin erfolgt. Dabei wird vorzugsweise die Ausgangsfrequenz f₀ angepasst. Dann wird insbesondere die Zwischenfrequenz f_{IM} konstant gehalten.

In einer bevorzugten Alternative erfolgt die Regelung anhand einer Phase eines transmittierten Signals, wobei insbesondere ein Wert der Phase von Null angestrebt wird. Dies entspricht der oben bereits beschriebenen Regelung anhand des Nulldurchgangs des Phasenverlaufs der S₁₁-Komponente bzw. der S₂₁-Komponente. Diese Alternative ist sehr genau und sehr schnell.

In einer weiteren bevorzugten Alternative ist vorgesehen, dass die Regelung anhand der Lage eines Maximums oder Minimums eines transmittierten und/oder reflektierten Signals erfolgt. Vorzugsweise wird hierzu die Ausgangsfrequenz periodisch zwischen wenigstens zwei Werten umgeschaltet, die so angepasst werden, dass die Seitenbandfrequenz abwechselnd oberhalb und unterhalb des Resonanzmaximums oder -minimums liegt, wobei angestrebt wird, bei beiden Frequenzen oder bei zwei Frequenzen, insbesondere bei den extremen Frequenzen, die gleiche Signalamplitude zu erreichen. In diesem Fall erfolgt die Umschaltung der Frequenz anhand der Ausgangsfrequenz f₀, während die Zwischenfrequenz f_{IM} konstant bleibt. Alternativ wird ebenfalls vorteilhafterweise ein Wert der Steigung der Resonanzkurve von Null angestrebt.

Die Einseitenband-Modulation und Einseitenband-Demodulation ergibt dann ein Signal mit konstanter Frequenz f_{IM}, die im Takt des Umschaltens der Frequenz f₀ ihre Amplitude und Phase ändert. Die Regelgröße in diesem Fall ist eine minimale bzw. verschwindende Differenz der Amplitude in beiden Fällen. Da ein Driften der Resonanzfrequenz zu einer charakteristischen Differenz zwischen den Amplituden bei beiden Frequenzen führt, die positiv oder negativ ist, ist auch diese Regelgröße gut zur Nachführung der Anregungsfrequenz nach der Resonanzfrequenz im Mikrowellenresonator geeignet.

Eine alternative Regelung sieht vorteilhafterweise vor, bei einer Messung des S₂₁-Parameters auf eine maximale Signalamplitude und/oder bei einer Messung des S₁₁-Parameters auf eine minimale Signalamplitude zu regeln.

Die zu den verschiedenen Erfindungsgegenständen, d.h. der erfindungsgemäßen Vorrichtung, der erfindungsgemäßen Messeinrichtung und dem erfindungsgemäßen Verfahren, genannten Merkmale, Eigenschaften und Vorteile gelten jeweils ohne Einschränkung auch für die jeweils anderen Erfindungsgegenstände. So sind u. a. die weiteren zu der erfindungsgemäßen Vorrichtung genannten Merkmale und ggf. abhängigen Ansprüche auch in vorteilhaften Weiterbildungen der erfindungsgemäßen Messeinrichtung anwendbar.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: den schematischen Aufbau einer Zigarettenstrangmaschine des Typs "PROTOS" der Anmelderin,
- Fig. 2: eine schematische Querschnittsdarstellung durch einen Mikrowellenresonator,
- Fig. 3: den frequenzabhängigen Verlauf der Amplituden der Streuparameter S₂₁ und S₁₁ bei befülltem und unbefülltem Resonator,
- Fig. 4: den frequenzabhängigen Verlauf der Phasen der Streuamplituden S₂₁ und S₁₁ bei befülltem und unbefülltem Resonator,
- Fig. 5: eine schematische Schaltungsanordnung einer erfindungsgemäßen Messeinrichtung,
- Fig. 6: eine schematische Schaltungsanordnung einer weiteren erfindungsgemäßen Messeinrichtung,
- Fig. 7: eine schematische Schaltungsanordnung einer weiteren erfindungsgemäßen Messeinrichtung,
- Fig. 8: eine schematische Schaltungsanordnung einer weiteren erfindungsgemäßen Messeinrichtung mit Frequenznachführung und
- Fig. 9: eine weitere schematische Schaltungsanordnung einer erfindungsgemäßen Messeinrichtung mit Frequenznachführung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

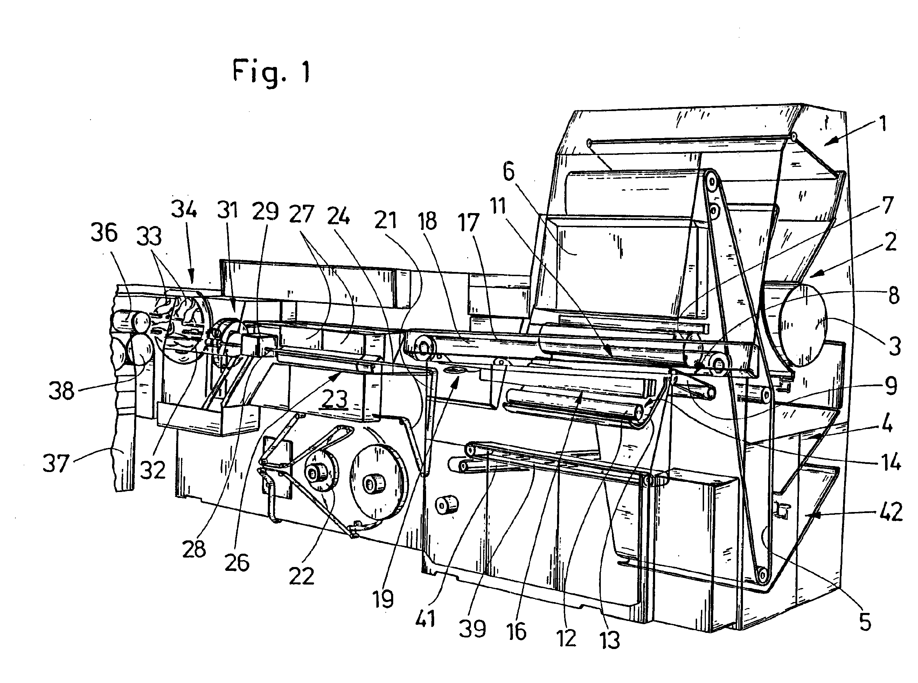

In Fig. 1 ist der prinzipielle Aufbau einer Zigarettenstrangmaschine des Typs "PROTOS" der Anmelderin erläutert. Von einer Schleuse 1 wird ein Vorverteiler 2 portionsweise mit losem Tabak beschickt. Eine Entnahmewalze 3 des Vorverteilers 2 ergänzt gesteuert einen Vorratsbehälter 4 mit Tabak, aus dem ein als Endlosband ausgebildeter Steilförderer 5 Tabak entnimmt und einen Stauschacht 6 beschickt. Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein als Endlosband geführtes und mit konstanter Geschwindigkeit umlaufendes Streutuch 9 geschleudert wird.

Ein auf dem Streutuch 9 gebildetes Tabakvlies wird in eine Sichteinrichtung 11 geschleudert, die einen Luftvorhang erzeugt, den größere bzw. schwere Tabakteile passieren, während alle anderen Tabakteilchen vom Luftstrom des Luftvorhanges in einen von einer Stiftwalze 12 und einer Wand 13 gebildeten Trichter 14 gelenkt werden. Von der Stiftwalze 12 wird der Tabak in einen Tabakkanal 16 gegen einen Strangförderer 17 geschleudert, an dem der Tabak mittels in eine Unterdruckkammer 18 gesaugter Luft gehalten und als Tabakstrang aufgeschauert wird. Ein Egalisator oder Trimmer 19, der im Wesentlichen aus einem Paar von in der Ebene der Transportrichtung des Tabakstrangs angeordneten rotierenden Scheiben und einem Abweiser besteht, entfernt überschüssigen Tabak vom Tabakstrang und schneidet den so gebildeten Tabakstrang auf eine gewünschte Dicke zu.

Anschließend wird der Tabakstrang auf einen im Gleichlauf geführten Zigarettenpapierstreifen 21 gelegt, der von einer Bobine 22 abgezogen wird und durch ein Druckwerk 23 geführt wird. Der Zigarettenpapierstreifen 21 wird auf ein angetriebenes Formatband 24 gelegt, das den Tabakstrang und den Zigarettenpapierstreifen 21 durch ein Format 26 transportiert, indem der Zigarettenpapierstreifen um den Tabakstrang gefaltet wird, so dass noch eine Kante absteht, die von einem nicht dargestellten Leimapparat in bekannter Weise beleimt wird. Daraufhin wird die Klebenaht geschlossen und von einer Tandemnahtplätte 27 getrocknet.

Ein so gebildeter Zigarettenstrang 28 durchläuft ein Strangdichtemessgerät 29, das den Egalisator 19 steuert und wird von einem Messerapparat 31 in doppelt lange Zigaretten 32 geschnitten. Diese werden von einer gesteuerte Arme 33 aufweisenden Übergabevorrichtung 34 einer Übernahmetrommel 36 einer Filteransetzmaschine 37 übergeben, auf deren Schneidtrommel 38 sie mit einem Kreismesser in Einzelzigaretten geteilt werden. Endlose Förderbänder 39, 41 fördern überschüssigen Tabak in einen unter dem Vorratsbehälter 4 angeordneten Behälter 42, aus dem der rückgeführte Tabak von dem Steilförderer 5 wieder entnommen wird.

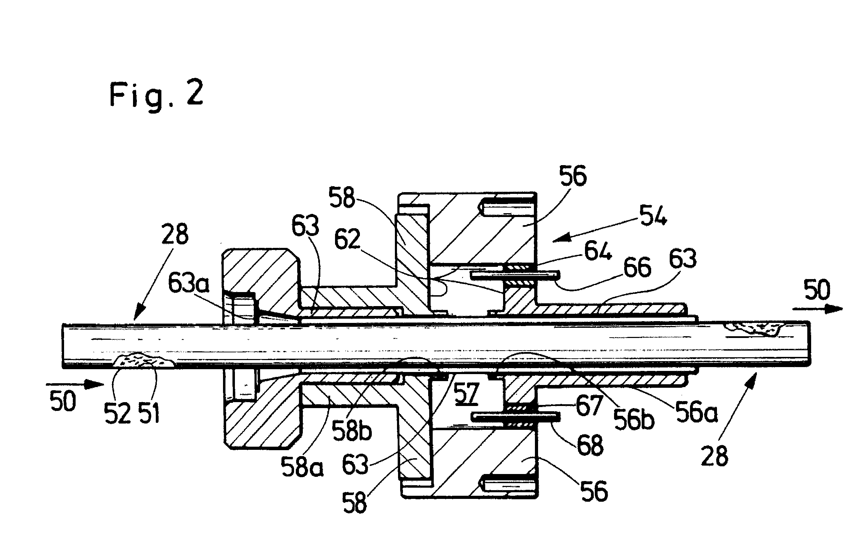

Fig. 2 zeigt eine schematische Querschnittsdarstellung eines geeigneten Resonatorgehäuses. Ein teilweise aufgebrochener, in Richtung des Pfeils 50 bewegter Zigarettenstrang 28, bestehend aus einem Füller 51 und einer Umhüllung 52 aus Zigarettenpapier, durchsetzt das Resonatorgehäuse 54, dem Mikrowellen zwecks Erfassung wenigstens einer Eigenschaft des Füllers 51, beispielsweise der Masse oder der Feuchtigkeit, zugeführt werden. Das Resonatorgehäuse 54 weist einen Hohlkörper in Form eines Hohlzylinders 56 auf, dessen Innenraum bzw. Resonatorraum 57 symmetrisch zum Zigarettenstrang 28 angeordnet ist. An ihm ist ein Deckel 58 zum Verschließen angeschraubt.

Der Resonatorraum 57 des Resonatorgehäuses 54 kann mit einer dünnen Goldschicht 62 bedampft sein, die eine die Messwertkonstanz beeinträchtigende Korrosionsbildung zuverlässig verhindert.

Zum mechanischen Abschluss des Resonatorraums 57 gegenüber dem Zigarettenstrang 28 und zwecks Verhinderung einer Verschmutzung des Resonatorraums 57 dient ein Schutzrohr 63, das vorteilhaft aus einer Substanz der Polyaryletherketon(PAEK)-Gruppe, beispielsweise Polyetheretherketon (PEEK) besteht. An einem seiner Enden 63a, an dem der Strang 28 in das Resonatorgehäuse 54 einläuft, ist das Schutzrohr 63 trichterförmig aufgeweitet.

Das Resonatorgehäuse 54 erstreckt sich außerhalb des Resonatorraums 57 rohrförmig (56a, 58a) auf beiden Seiten in Richtung des Strangs 28 nach außen, um den Austritt von Mikrowellen aus dem Resonatorraum 57 zu verhindern. Es erstreckt sich auch rohrförmig (56b, 58b) etwas nach innen. Zur Einkopplung der von einem Mikrowellengenerator erzeugten Mikrowelle dient eine durch einen Isolierring 64 vom Hohlzylinder 56 isolierte Einkopplungsantenne 66. Zum Auskoppeln von Mikrowellen, die einer nicht dargestellten Auswerteschaltung zugeführt werden sollen, dient eine durch eine Isolierung 67 vom Hohlzylinder 56 isolierte Auskopplungsantenne 68.

Die Frequenz des eingeführten Mikrowellensignals wird vorzugsweise so gewählt, dass in der Resonanz die Amplitude des Mikrowellenfeldes im Hohlraum 57 ein Maximum im Zentrum, d.h. am Ort des Zigarettenstrangs 28 aufweist. Wenn die eingeführte Frequenz nicht der Resonanzfrequenz entspricht, hat die Amplitude am Ort der Einkopplungsantenne 66 ein Maximum und nimmt in Richtung auf die Auskopplungsantenne 68 ab. Dabei hat das Feld über den Querschnitt des Zigarettenstranges 28 einen abnehmenden Amplitudenverlauf, ist also inhomogen.

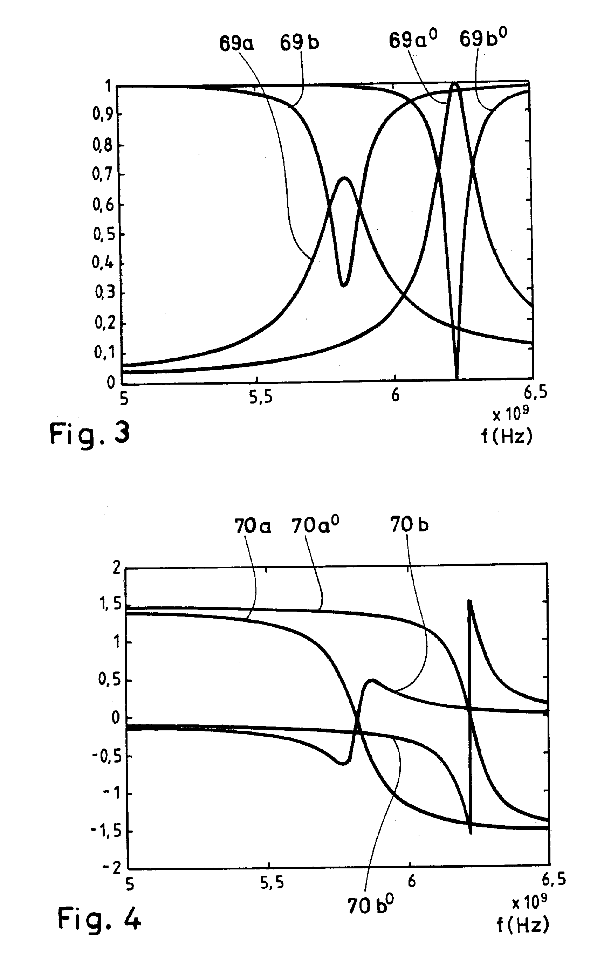

In den Figuren 3 und 4 sind die Amplitude und die Phase der Streuparameter S₁₁ und S₂₁ in einer Simulation dargestellt. Die X-Achsen stellen die Frequenz des eingeführten Mikrowellensignals dar und bewegen sich zwischen 5 GHz und 6,5 GHz.

In Fig. 3 ist auf der Y-Achse die relative Amplitude mit Werten zwischen 0 und 1 dargestellt. Dem unbeladenen Resonator entsprechen die mit den Bezugszeichen 69a⁰ und 69b⁰ bezeichneten Kurven. Dabei stellt 69a⁰ den Verlauf der frequenzabhängigen transmittierten Komponente, also des S₂₁-Parameters, dar, die bei ca. 6,23 GHz ein Maximum mit einem Wert von 1 aufweist. An dieser Stelle herrscht somit vollständige Transmission. Die entsprechende Reflexionskurve für den Streuparameter S₁₁ bei unbeladenem Resonator unendlicher Eigengüte mit dem Bezugszeichen 69b⁰ weist an dieser Stelle ein Minimum mit dem Wert 0 auf. Außerhalb dieses Minimums weist der Parameter S₁₁ einen Wert nahe 1 auf, es herrscht somit beinahe vollständige Reflexion.

Wenn der Resonator mit einem Materialstrang, beispielsweise einem Zigarettenstrang 28 durchsetzt ist, verschiebt sich die Resonanzfrequenz hin zu einer niedrigeren Frequenz, im dargestellten Beispiel zu ca. 5,8 GHz. Dies gilt sowohl für den S₂₁-Parameter 69a als auch für den S₁₁-Paramter 69b. Gleichzeitig verbreitern sich die beiden Resonanzkurven. Außerdem nimmt die Amplitude in der Resonanz ab. So erreicht die Kurve des S₂₁-Parameters nur noch ein Maximum von ca. 0,7, während die Reflexion, d.h. der S₁₁-Parameter, in der die Resonanz einen Wert von 0,3 aufweist.

Nicht dargestellt ist, dass im verlustfreien Fall, d.h. dem Fall ohne Material im Resonator mit unendlicher Eigengüte, die Größe (|S₁₁|² + |S21|²)^{0,5} im gesamten Frequenzbereich den Betrag 1 hat, während er im verlustbehafteten Fall in der Resonanz einen Beitrag hat, der kleiner als 1 ist, wobei das Minimum bei der Resonanzfrequenz erreicht wird. Die Differenz zu 1 ist ein Maß für die im Resonator umgesetzte Verlustleistung. Dieser Wert ist in der Resonanz immer maximal.

In Fig. 4 sind die Phasenverläufe zu den in Fig. 3 dargestellten Resonanzkurven im beladenen und unbeladenen Zustand dargestellt. Im unbeladenen Zustand weist der Phasenverlauf 70a⁰ des S₂₁-Parameters, der bei niedrigen Frequenzen mit dem Wert +π/2 beginnt, einen Nulldurchgang auf, bei 6,23 GHz, um bei höheren Frequenzen zum Wert -π/2 hin zu konvergieren. Der entsprechende S₁₁-Parameter 70b⁰ beginnt mit einem geringen negativen Wert und nähert sich der Resonanzfrequenz so an, dass sein Wert in Richtung auf -π/2 abnimmt. Bei Durchqueren der Resonanzfrequenz schlägt die Phase um und nimmt den Wert +π/2 an. Bei weiter höheren Frequenzen nimmt der Wert wiederum in Richtung auf 0 ab. Hierbei ist ein idealer Mikrowellenresonator ohne jegliche Verluste angenommen.

Im Fall eines beladenen Mikrowellenresonators ergibt sich ein Phasenverlauf 70a des S₂₁-Parameters, dessen Nulldurchgang gegenüber dem unbeladenen Fall 70a⁰ zu der niedrigeren Resonanzfrequenz von ca. 5,8 GHz hin verschoben ist. Außerdem ist die Steilheit des Nulldurchgangs etwas verringert. Der Phasenverlauf 70b des S₁₁-Paramters ist aufgrund der Verbreiterung der Resonanz und aufgrund des Verlustes im Resonator bei Anwesenheit eines Materialstranges gegenüber dem unbeladenen Fall deutlich verändert. Auch in diesem Fall beginnt der S₁₁-Parameter zunächst bei niedrigen Frequenzen bei einem leicht negativen Wert, um bei Annäherung, an die Resonanzfrequenz einen stärker negativen Wert anzunehmen. Es ergibt sich jedoch kein Umschlag über den Wert -π/2 auf +π/2, sondern es ergibt sich ein Nulldurchgang mit positiver Steigung. Kurz nach Durchqueren der Nulllinie nimmt die Phase 70b des S₁₁-Parameters im beladenen Fall ein positives Maximum bei ca. 0,5 an, um dann umzukehren und bei hohen Frequenzen wieder Richtung 0 zu streben. Die Nulldurchgänge des Phasenverlaufs 70a des S₂₁-Parameters und der Phasenverlaufs 70b des S₁₁-Parameters sind im unmittelbaren Umfeld des Nulldurchgangs gut als Regelgröße für eine Frequenznachführung geeignet.

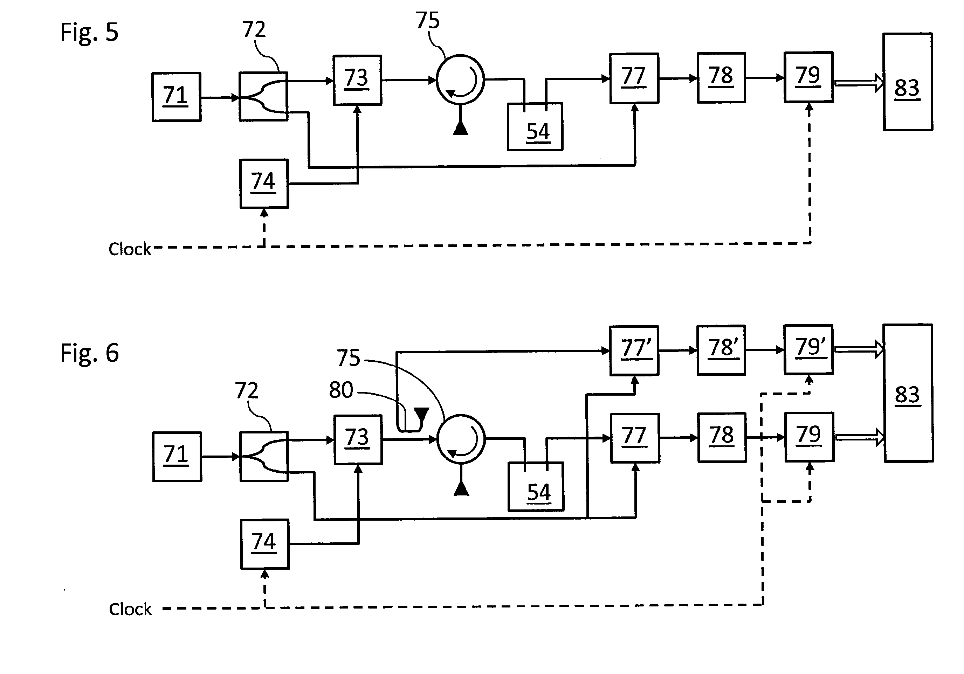

In Fig. 5 ist ein erstes Beispiel einer erfindungsgemäßen Schaltungsanordnung zur Verwirklichung eines Einband-Modulationsverfahrens angegeben. In einem Synthesizer oder Mikrowellengenerator 71 wird als Ausgangssignal ein Mikrowellensignal mit der Frequenz f₀ erzeugt, beispielsweise von ca. 5,8 GHz. In einem Koppler 72 wird das Signal in zwei phasengleiche Signale aufgeteilt. Eines dieser Signale wird einem Einseitenband-Modulator 73 zugeführt, während das andere einem Einseitenband-Demodulator 77 zugeführt wird. Dem Einseitenband-Modulator 73 wird ein von einem Zwischenfrequenzoszillator 4 erzeugtes Zwischenfrequenzsignal mit der Zwischenfrequenz f_{IM} zugeführt, die deutlich niedriger liegt als f₀, beispielsweise bei 10 MHz. Das Zwischenfrequenzsignal wird dabei auf ein extern vorgegebenes Taktsignal "Clock" synchronisiert.

Der Einseitenband-Modulator erzeugt ein Mikrowellensignal mit der Frequenz f₀+f_{IM} oder f₀-f_{IM}, das einem Zirkulator 75 zugeführt wird. Der Zirkulator 75 lässt das Signal von dem Einseitenband-Modulator 73 zu einem Eingangsport eines Mikrowellenresonators 54 passieren, während von dem Eingangsport des Mikrowellenresonators 54 reflektierte Mikrowellenleistung im Zirkulator 75 auf einen dritten Ausgang umgeleitet wird, der eine als Dreieck symbolisierte Abschlusslast aufweist, die die reflektierte Leistung vollständig aufnimmt. Es wird somit keine reflektierte Leistung an den Einseitenband-Modulator 73 zurückgeführt.

Im in Fig. 5 dargestellten Beispiel ist ein Ausgangsport des Mikrowellenresonators 54 mit dem Einseitenband-Demodulator 77 verbunden. Im Einseitenband-Demodulator 77 wird das Ausgangssignal des Ausgangsports des Mikrowellenresonators 54 mit der Frequenz f₀+f_{IM} oder f₀-f_{IM} mit dem Ausgangssignal aus dem Koppler 72 mit der Frequenz f₀ gemischt und ein Signal mit der deutlich niedrigeren Zwischenfrequenz f_{IM} unter anderem erzeugt. Es wird dem Tiefpassfilter 78 zur Unterdrückung hochfrequenter Signalanteile zugeführt und in einer Abtast- und Digitalisierungsstufe, insbesondere einem Analog-Digital-Wandler 79, die vom externen Taktsignal "Clock" angesteuert wird, in Digitalwerte gewandelt. Das Synchronisierungssignal ist mittels einer gestrichelten Linie dargestellt.

Wegen des Zusammenwirkens von Einseitenband-Modulator 73 und Einseitenband-Demodulator 77 sind in dem vom Einseitenband-Demodulator 77 abgegebenen Zwischenfrequenzsignal f_{IM} sowohl die Amplitude des Parameters S₂₁ als auch dessen Phase enthalten (vgl. Figuren 3 und 4). Mit der Abtastschaltung, die in Bezug auf das externe Taktsignal synchronisiert ist, kann der Parameter S₂₁ nach Betrag und Phase bestimmt werden.

In Fig. 6 ist eine weitere erfindungsgemäße Schaltanordnung dargestellt, wobei nunmehr zwei Analyseanordnungen mit Serienschaltungen von Einseitenband-Demodulator, Tiefpass und Analog-Digital-Wandler gezeigt sind.

Im Unterschied zu Fig. 5, wo lediglich das transmittierte Signal einer entsprechenden Einseitenband-Demodulation, Filterung und Digitalisierung unterworfen wurde, wird gemäß Fig. 6 mit einem Richtkoppler 80 das unveränderte Eingangssignal des Resonators bzw. das Ausgangssignal aus dem Einseitenband-Modulator 73 abgenommen und einer entsprechenden Auswertung in einem Einseitenband-Demodulator 77', Tiefpassfilter 78' und Analog-Digital-Wandler 79' unterworfen. Hierzu wird das Ausgangssignal mit der Frequenz f₀ gesplittet und den beiden Einseitenband-Demodulatoren 77 und 77' zugeführt. Auch das Synchronisierungssignal "Clock" wird beiden Analog-Digital-Wandlern 79, 79' zugeführt. Auf diese Weise ist das Signal, das die Amplitude und Phase des Streuparamters S₂₁ enthält, mit dem generierenden Signal vergleichbar, so dass etwaige Veränderungen im Signal, beispielsweise Änderungen der Amplitude, durch Verhältnisbildung herausgerechnet werden können. Auch die Verschiebung der Phase des Ausgangssignals kann auf diese Weise erkannt und in der Auswertung der Phase des S₂₁-Parameters berücksichtigt und korrigiert werden.

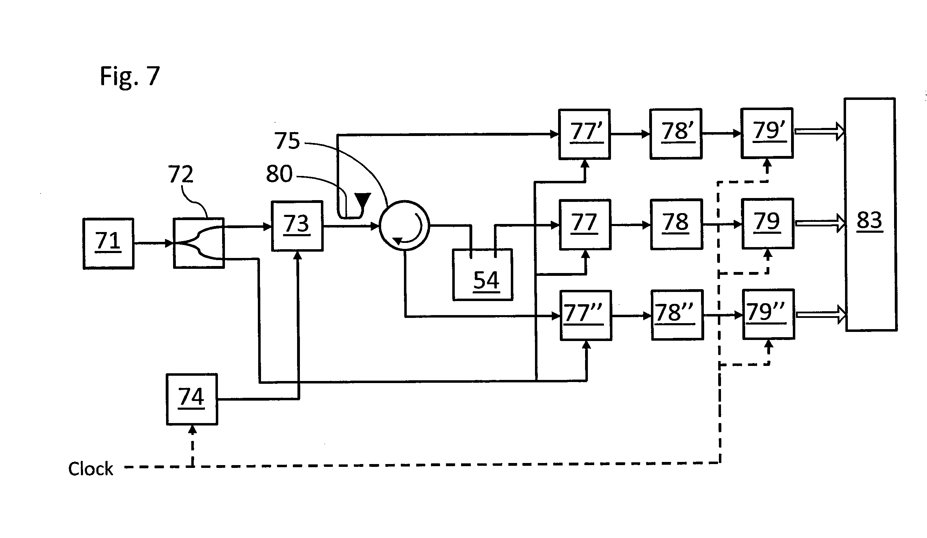

In Fig. 7 ist eine Weiterbildung der Schaltungsanordnung aus Fig. 6 dargestellt. Zusätzlich zu den in Fig. 6 dargestellten Komponenten ist eine weitere Analyseanordnung mit einer Serienschaltung aus einem Einseitenband-Demodulator 77", Tiefpass 78" und Analog-Digital-Wandler 79" dargestellt, die ein von dem Mikrowellenresonator 54 reflektiertes und über den Zirkulator 75 ausgesondertes Messsignal empfangen und einer entsprechenden Einseitenband-Demodulation und der Digitalisierung unterwerfen. Der Einseitenband-Demodulator 77" ist ebenfalls mit dem Signal f₀ aus dem Koppler 72 beaufschlagt. Der Analog-Digital-Wandler 79" erhält ebenfalls das Synchronisierungssignal "Clock".

Die in Fig. 7 dargestellte Schaltungsanordnung ermöglicht es, die Amplituden und Phasen sowohl des Streuparameters S₂₁ als auch des Streuparameters S₁₁ zu ermitteln.

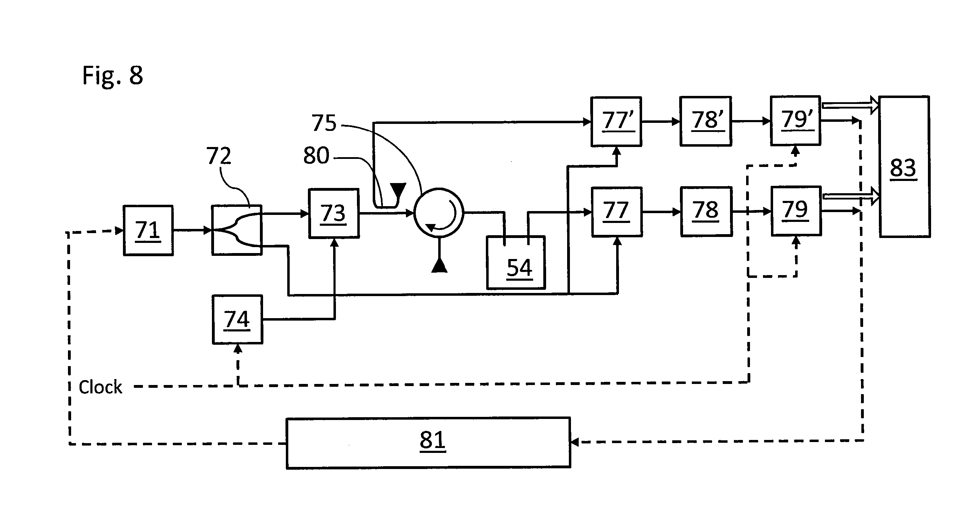

Fig. 8 zeigt eine Weiterentwicklung der Schaltungsanordnung gemäß Fig. 6. Zusätzlich zu den in Fig. 6 dargestellten Komponenten ist eine Steuereinrichtung in Form eines, insbesondere als digitaler Signalprozessor ausgebildeten, Mikroprozessors 81 vorgesehen, die als Steuersignale die von den Analog-Digital-Wandlern 79 und 79' ermittelten digitalisierten Messwerte erhält. Da der Mikroprozessor 81 somit sämtliche Informationen über die Phasenlage des S₂₁-Streuparameters enthält, ist der Mikroprozessor 81 in der Lage, den Mikrowellengenerator 71 anzusteuern und dessen Frequenz f₀ so anzupassen, dass die Phasenlage auf den Nulldurchgang geregelt wird. Damit befindet sich das in den Mikrowellenresonator 54 eingeleitete Mikrowellensignal stets in der momentanen Resonanz. Diese Art der Steuerung ist sehr schnell und sehr genau.

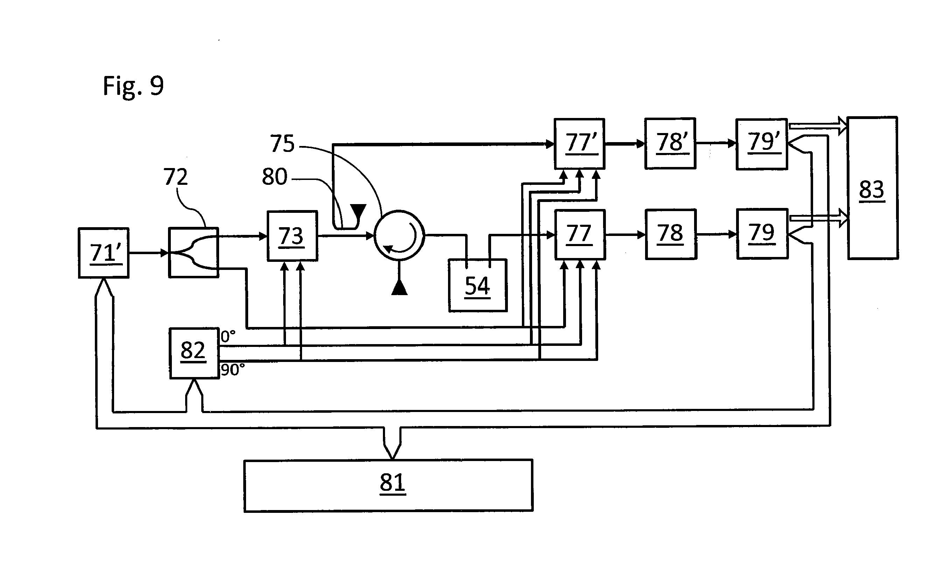

In Fig. 9 ist eine Konkretisierung einer vorteilhaften Schaltungsanordnung schematisch dargestellt. Wie in Fig. 8 bereits geschehen, handelt es sich um eine Schaltungsanordnung, in der sowohl der S₂₁-Streuparameter analysiert wird als auch das ungestörte Eingangssignal, so dass eine Drift im Eingangssignal nicht zu einer Messungenauigkeit führt. Auch wird die Frequenz bei der Schaltungsanordnung der Fig. 9 anhand der Frequenz f₀ aus dem Mikrowellengenerator 71 nachgeführt.

Der Mikrowellengenerator ist in Fig. 9 als DDS-Synthesizer 71' ausgeführt, wobei DDS für "Direkte Digitale Synthese" steht. Dies erlaubt eine äußerst frequenz- und phasenstabile Erzeugung von Mikrowellensignalen. Die Zwischenfrequenz wird durch einen Digital-Analog-Wandler 82 erzeugt, wobei zwei um 90° zueinander verschobene Signale direkt erzeugt werden, die in der Modulationsstufe und der Demodulationsstufe benötigt werden.

Der Einseitenband-Modulator 73 ist als I/Q-Modulator ausgebildet, während die Einseitenband-Demodulatoren 77, 77' als I/Q-Demodulatoren ausgebildet sind. Dies ermöglicht eine besonders robuste frequenz- und phasenstabile Modulation und Demodulation des Mikrowellensignals. Bei der I/Q-Modulation und -Demodulation handelt es sich um eine Art der Modulation, bei der eine "Inphase"-Komponente ("I") und eine "Quadratur-Komponente ("Q") erzeugt werden. Da der Einseitenband-Modulator 73 mit demselben und 0° und 90° phasenverschobenen Eingangssignalen gespeist wird wie die Einseitenband-Demodulatoren 77 und 77', wird die Phasenlage in diesem Fall unveränderlich festgelegt. Messunsicherheiten in der Phasenlage sind dadurch ausgeschlossen.

Die digitalisierten Signale und Steuerbefehle sowie Synchronisierungssignale sind als breites Band in Fig. 9 symbolisiert dargestellt, die die Analog-Digital-Wandler 79, 79' mit dem Mikroprozessor 81, dem Zwischenfrequenz-Generator 82 und dem DDS-Synthesizer 71' verbindet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Schleuse
- 2: Vorverteiler
- 3: Entnahmewalze
- 4: Vorratsbehälter
- 5: Steilförderer
- 6: Stauschacht
- 7: Stiftwalze
- 8: Ausschlagwalze
- 9: Streutuch
- 11: Sichteinrichtung
- 12: Stiftwalze
- 13: Wand
- 14: Trichter
- 16: Tabakkanal
- 17: Strangförderer
- 18: Unterdruckkammer
- 19: Trimmer
- 21: Zigarettenpapierstreifen
- 22: Bobine
- 23: Druckwerk
- 24: Formatband
- 26: Format
- 27: Tandemnahtplätte
- 28: Zigarettenstrang
- 29: Strangdichtemessgerät
- 31: Messerapparat
- 32: doppeltlange Zigaretten
- 33: Arm
- 34: Übergabevorrichtung
- 36: Übernahmetrommel
- 37: Filteransetzmaschine
- 38: Schneidtrommel
- 39: Förderband
- 41: Förderband
- 42: Behälter
- 50: Bewegungsrichtung
- 51: Füller
- 52: Umhüllung
- 54: Resonatorgehäuse
- 56: Hohlzylinder
- 56a: äußere Erstreckung des Hohlzylinders 56
- 56b: innere Erstreckung des Hohlzylinders 56
- 57: Resonatorraum
- 58: Deckel
- 58a: äußere Erstreckung des Deckels 58
- 58b: innere Erstreckung des Deckels 58
- 62: Goldschicht
- 63: Schutzrohr
- 63a: Schutzrohreinlass
- 64: Isolierring
- 66: Einkopplungsantenne
- 67: Isolierung
- 68: Auskopplungsantenne
- 69a: Betrag |S₂₁| des beladenen Resonatorgehäuses
- 69a⁰: Betrag |S₂₁| des unbeladenen Resonatorgehäuses
- 69b: Betrag |S₁₁| des beladenen Resonatorgehäuses
- 69b⁰: Betrag |S₁₁| des unbeladenen Resonatorgehäuses
- 70a: Phase(S₂₁) des beladenen Resonatorgehäuses
- 70a⁰: Phase(S₂₁) des unbeladenen Resonatorgehäuses
- 70b: Phase(S₁₁) des beladenen Resonatorgehäuses
- 70b⁰: Phase(S₁₁) des unbeladenen Resonatorgehäuses
- 71: Mikrowellengenerator
- 71': DDS-Synthesizer
- 72: Koppler
- 73: Einseitenband-Modulator
- 74: Zwischenfrequenzoszillator
- 75: Zirkulator
- 77, 77', 77": Einseitenband-Demodulator
- 78, 78', 78": Tiefpassfilter
- 79, 79', 79": Analog-Digital-Wandler
- 80: Richtkoppler
- 81: Mikroprozessor
- 82: Digital-Analog-Wandler
- 83: Auswerteeinrichtung

## Patentansprüche

1. Vorrichtung zur Verarbeitung und Messung von Eigenschaften eines bewegten Materialstrangs (28) der Tabak verarbeitenden Industrie, umfassend eine Mikrowellenmesseinrichtung (29), die einen Mikrowellenresonator (54) aufweist, durch den der Materialstrang (28) gefördert wird oder förderbar ist, sowie einen Mikrowellengenerator (71, 71') mit einer Ausgangsfrequenz f₀, **dadurch gekennzeichnet, dass** der Mikrowellenresonator (54) über einen Einseitenband-Modulator (73) mit einem Seitenbandsignal beaufschlagbar oder beaufschlagt ist, dessen Seitenbandfrequenz f₀+f_{IM} oder f₀-f_{IM} gegenüber der Ausgangsfrequenz f₀ um eine von einem frequenzstabilisierten Oszillator (74, 82) erzeugte Zwischenfrequenz f_{IM}, die kleiner als f₀ ist, verschoben ist, wobei wenigstens eine Analyseanordnung (77, 78, 79; 77', 78', 79'; 77", 78", 79") vorgesehen ist, die eine Serienschaltung aus einem Einseitenband-Demodulator (77, 77', 77"), einem Tiefpassfilter (78, 78', 78") und einem Analog-Digital-Wandler (79, 79', 79") umfasst, wobei der Einseitenband-Demodulator (77, 77', 77") einerseits mit einem von dem Mikrowellenresonator (54) transmittierten oder reflektierten Messsignal der Seitenbandfrequenz f₀+f_{IM} oder f₀-f_{IM} und andererseits mit der Ausgangsfrequenz f₀ beaufschlagt oder beaufschlagbar ist, wobei der Tiefpassfilter (78, 78', 78") ausgebildet ist, ein Ausgangssignal des Einseitenband-Demodulators (77, 77', 77") mit der Zwischenfrequenz f_{IM} durchzulassen und höherfrequente Signalanteile herauszufiltern.

2. Vorrichtung nach Anspruch 1, **dadurch gekennzeichnet, dass** wenigstens zwei, insbesondere gleichartige, Analyseanordnungen (77, 78, 79; 77", 78", 79") mit jeweils einer Serienschaltung umfassend jeweils einen Einseitenband-Demodulator (77, 77"), einen Tiefpassfilter (78, 78") und einen Analog-Digital-Wandler (79, 79") vorgesehen sind, wobei eine Analyseanordnung (77, 78, 79) ein von dem Mikrowellenresonator (54) transmittiertes Messsignal empfängt und eine andere Analyseanordnung (77", 78", 79") ein von dem Mikrowellenresonator (54) reflektiertes Messsignal empfängt.

3. Vorrichtung nach Anspruch 1 oder 2, **dadurch gekennzeichnet, dass** zwischen dem Einseitenband-Modulator (73) und dem Mikrowellenresonator (54) ein Isolator, ein Zirkulator (75), ein Richtkoppler (80), ein anderer Signalteiler und/oder ein Dämpfungsglied angeordnet ist.

4. Vorrichtung nach Anspruch 3, **dadurch gekennzeichnet, dass** eine weitere, insbesondere gleichartige, Analyseanordnung (77', 78', 79') mit einer Serienschaltung umfassend einen Einseitenband-Demodulator (77'), einen Tiefpassfilter (78') und einen Analog-Digital-Wandler (79') vorgesehen ist, die über den eingangsseitig angeordneten Zirkulator (75), Isolator, Richtkoppler (80), anderen Signalteiler und/oder Dämpfungsglied einen ausgekoppelten Teil des unmodulierten Seitenbandsignals empfängt.

5. Vorrichtung nach einem der Ansprüche 1 bis 4, **dadurch gekennzeichnet, dass** eine Steuereinrichtung (81) vorgesehen ist, mittels der die Ausgangsfrequenz f₀ so steuerbar ist, dass die Seitenbandfrequenz f₀+f_{IM} oder f₀-f_{IM} einer momentanen Resonanzfrequenz im Mikrowellenresonator (54) nachgeführt wird, wobei insbesondere die Steuereinrichtung (81) ausgebildet ist, den Wert der Phase (70a) und/oder der Amplitude des transmittierten oder reflektierten Signals als Regelgröße zu verwenden, wobei ein Wert der Phase von Null und/oder ein Amplitudenmaximum oder ein Amplitudenminimum angestrebt wird.

6. Vorrichtung nach einem der Ansprüche 1 bis 5, **dadurch gekennzeichnet, dass** eine digitale Signalerzeugungsvorrichtung (71') als Mikrowellengenerator (71) zur Erzeugung der Ausgangsfrequenz f₀ durch direkte digitale Synthese vorgesehen ist, wobei der Einseitenband-Modulator (73) als I/Q-Modulator und der Einseitenband-Demodulator (77, 77', 77") als I/Q-Demodulator ausgebildet ist, wobei insbesondere ein Digital-Analog-Wandler (82) oder der I/Q-Modulator und/oder der I/Q-Demodulator zur Erzeugung von zwei um 90° gegeneinander verschobenen Signalen für die Zwischenfrequenz f_{IM} vorgesehen ist.

7. Vorrichtung nach einem der Ansprüche 1 bis 6, **dadurch gekennzeichnet, dass** eine Auswerteeinrichtung (83) zur Auswertung der Ausgangssignale des oder der Analog-Digital-Wandler (79, 79', 79") vorgesehen ist, wobei die Auswerteeinrichtung insbesondere in die Steuereinrichtung (81) integriert ist.

8. Mikrowellenmesseinrichtung für eine Vorrichtung zur Verarbeitung und Messung von Eigenschaften eines bewegten Materialstrangs (28) der Tabak verarbeitenden Industrie nach einem der Ansprüche 1 bis 7, mit einem Mikrowellenresonator (54), durch den der Materialstrang (28) gefördert wird oder förderbar ist, sowie einem Mikrowellengenerator (71, 71') mit einer Ausgangsfrequenz f₀, **dadurch gekennzeichnet, dass** der Mikrowellenresonator (54) über einen Einseitenband-Modulator (73) mit einem Seitenbandsignal beaufschlagbar oder beaufschlagt ist, dessen Seitenbandfrequenz f₀+f_{IM} oder f₀-f_{IM} gegenüber der Ausgangsfrequenz f₀ um eine von einem frequenzstabilisierten Oszillator (74, 82) erzeugte Zwischenfrequenz f_{IM}, die kleiner als f₀ ist, verschoben ist, wobei wenigstens eine Analyseanordnung (77, 78, 79; 77', 78', 79'; 77", 78", 79") vorgesehen ist, die eine Serienschaltung aus einem Einseitenband-Demodulator (77, 77', 77"), einem Tiefpassfilter (78, 78', 78") und einem Analog-Digital-Wandler (79, 79', 79") umfasst, wobei der Einseitenband-Demodulator (77, 77") einerseits mit einem von dem Mikrowellenresonator (54) transmittierten oder reflektierten Messsignal der Seitenbandfrequenz f₀+f_{IM} oder f₀-f_{IM} und andererseits mit der Ausgangsfrequenz f₀ beaufschlagt oder beaufschlagbar ist, wobei der Tiefpassfilter (78, 78', 78") ausgebildet ist, ein Ausgangssignal des Einseitenband-Demodulators (77, 77', 77") mit der Zwischenfrequenz f_{IM} durchzulassen und höherfrequente Signalanteile herauszufiltern.

9. Verfahren zum Verarbeiten und Messen von Eigenschaften eines bewegten Materialstrangs (28) der Tabak verarbeitenden Industrie, der durch einen Mikrowellenresonator (54) gefördert wird, wobei eine Ausgangsfrequenz f₀ erzeugt wird, **dadurch gekennzeichnet, dass** die Ausgangsfrequenz f₀ in einem Einseitenband-Modulator (73) mit einer Zwischenfrequenz f_{IM}, die kleiner als f₀ ist, moduliert wird und ein Seitenbandsignal mit einer Seitenbandfrequenz f₀+f_{IM} oder f₀-f_{IM} in den Mikrowellenresonator (54) eingeleitet wird, wobei das vom Mikrowellenresonator (54) transmittierte und/oder reflektierte Signal der Seitenbandfrequenz f₀+f_{IM} oder f₀-f_{IM} in einem Einseitenband-Demodulator (77, 77', 77") mit einem Signal der Ausgangsfrequenz f₀ moduliert wird und in einem Tiefpassfilter (78, 78', 78") ein Messsignalanteil mit der Zwischenfrequenz f_{IM} zu einem Analog-Digital-Wandler (79, 79', 79") durchgelassen wird, während höherfrequente Signalanteile herausgefiltert werden.

10. Verfahren nach Anspruch 9, **dadurch gekennzeichnet, dass** mittels Einseitenband-Demodulation mit der Ausgangsfrequenz f₀ ein durch einen Isolator, einen Zirkulator (75), einen Richtkoppler (80) und/oder einen anderen Signalteiler vom Mikrowellenresonator (54) abgeschirmtes Seitenbandsignal der Seitenbandfrequenz f₀+f_{IM} oder f₀-f_{IM} auf die Zwischenfrequenz f_{IM} herab moduliert und über einen Tiefpassfilter (78') auf einen Analog-Digital-Wandler (79') übertragen wird.

11. Verfahren nach Anspruch 9 oder 10, **dadurch gekennzeichnet, dass** sowohl der oder die Analog-Digital-Wandler (79, 79', 79") als auch ein Oszillator (74, 82), der die Zwischenfrequenz f_{IM} erzeugt, auf ein frequenzstabilisiertes Zeitsignal hin synchronisiert werden.

12. Verfahren nach einem der Ansprüche 9 bis 11, **dadurch gekennzeichnet, dass** eine Regelung der Seitenbandfrequenz auf eine momentane Resonanzfrequenz im Mikrowellenresonator (54) hin erfolgt, insbesondere durch Anpassung der Ausgangsfrequenz f₀, anhand einer Phase (70a) eines transmittierten Signals, wobei insbesondere ein Wert der Phase von Null angestrebt wird, und/oder anhand der Lage eines Maximums oder Minimums eines transmittierten und/oder reflektierten Signals (69a, 69b).

13. Verfahren nach Anspruch 12, **dadurch gekennzeichnet, dass** die Ausgangsfrequenz periodisch zwischen wenigstens zwei Werten umgeschaltet wird, die so angepasst werden, dass die Seitenbandfrequenz abwechselnd oberhalb und unterhalb des Resonanzmaximums oder -minimums liegt, wobei angestrebt wird, bei beiden Frequenzen oder bei zwei Frequenzen, insbesondere bei den extremen Frequenzen, die gleiche Signalamplitude zu erreichen.

14. Verfahren nach Anspruch 12 oder 13, **dadurch gekennzeichnet, dass** ein Wert der Steigung der Resonanzkurve von Null angestrebt wird.

15. Verfahren nach einem der Ansprüche 12 bis 14, **dadurch gekennzeichnet, dass** bei einer Messung des S₂₁-Parameters auf eine maximale Signalamplitude und/oder bei einer Messung des S₁₁-Parameters auf eine minimale Signalamplitude geregelt wird.
